# EUROPEAN PATENT SPECIFICATION

(11) **EP 3 528 485 B1**
(45) Date of publication and mention of the grant of the patent: **19.05.2021**
(21) Application number: 17885479.0
(22) Date of filing: 08.03.2017
(51) Int. Cl.: H04N 1/04, H04N 1/028

(54) **IMAGE SCANNING APPARATUS AND IMAGE SCANNING METHOD**
BILDABTASTVORRICHTUNG UND BILDABTASTVERFAHREN
APPAREIL ET PROCÉDÉ DE BALAYAGE D'IMAGE

(30) Priority: 29.12.2016 KR 20160182468
(43) Date of publication of application: 21.08.2019
(73) Proprietor: Hewlett-Packard Development Company, L.P., Spring, TX 77389 (US)
(72) Inventor: KIM, Kyung-rok, Seongnam-si Gyeonggi-do 13587 (KR)
(74) Representative: Appleyard Lees IP LLP
(86) International application number: PCT/KR2017/002489
(87) International publication number: WO 2018/124391

(56) References cited:
- JP-A- H1 084 458
- JP-A- H1 084 458
- JP-A- H05 130 321
- JP-A- 2001 092 195
- JP-A- 2002 111 963
- JP-A- 2015 109 604
- US-A1- 2008 002 240
- US-A1- 2014 210 928

## Description

### Technical Field

The disclosure is related to an image scanning apparatus and an image scanning method, and more particularly, to an image scanning apparatus that improves resolution capability of an image in a sub-scan direction of a light source by controlling an exposing time of a scan light source, and an image scanning method.

### Background Art

The image scanning apparatus is an apparatus for scanning original images such as documents, pictures, or films, and converting the original images into digital data. In this case, digital data may be displayed on a monitor of a computer, or printed by a printer to be generated as output images. Representative examples of the apparatus include a scanner, a copy machine, a facsimile, a multifunction peripheral (MFP) that integrally implements these functions.

The image scanning apparatus performs a scan job by moving paper or a scan module. As such, the scan job is performed under the condition where the paper or the scan module moves in a sub-scan direction, the actual scanning area for a unit pixel to be scanned is a unit pixel area at least twice as large as exact one pixel area in the main scan direction.

The conventional image scanning apparatus has a decrease in the Modulation Transfer Function (MTF) for the sensitivity characteristic in the main scan direction with respect to the sub-scan direction. US2008/0002240A1 discloses an image reading apparatus including a light source having three color-types of LEDs that are turned on in a color change order.

### Disclosure

### Technical Problem

An aspect of the examples relates to providing an image scanning apparatus and image scanning method for improving a transfer function of a light source in a sub-scan direction by controlling an exposure time of a scan light source.

### Technical Solution

The invention is defined by the independent claims. The dependent claims define advantageous embodiments. Further features of the present invention will become apparent from the following description of exemplary embodiments with reference to the attached drawings. Any "aspect", "example" and "embodiment" of the description not falling within the scope of the claims does not form part of the invention and is provided for illustrative purposes only.

According to an example, there is provided an image scanning apparatus, including a lighting unit to irradiate light onto paper using an LED light source, a scan unit to generate a scan image by scanning image information of paper using light reflected by the paper, and a processor to control the lighting unit to irradiate light on each unit pixel by a predetermined duty

The processor may control the lighting unit to irradiate light continuously on each unit pixel at a predetermined time point and not irradiate the light after a time corresponding to the predetermined duty.

The processor may control the lighting unit to irradiate light of a brightness value inversely proportional to the predetermined duty.

The predetermined duty may be between 5% and 50%.

The image scanning apparatus may further include a driver to move the paper or the scan unit.

The processor may generate a control signal with respect to the LED light source according to an operation speed of the driver and the predetermined duty and provide the control signal to the lighting unit.

The scan unit may include an image sensor in which a plurality of Charge Coupled Devices (CCDs) are disposed in a row in a main scan direction of the paper.

The image scanning apparatus may further include an image forming unit to print the generated scan image.

The image scanning apparatus may be one of a copy machine, a facsimile, or a multifunction peripheral (MFP).

According to an example, there is provided a method for image scanning of an image scanning apparatus, the method includes irradiating light on each unit pixel by a predetermined duty during a movement process of paper in a sub-scan direction using an LED light source, and scanning image information of paper using light reflected by the paper and generating a scan image.

The irradiating may include continuously irradiating light on each unit pixel at a predetermined time point and not irradiating the light after a time corresponding to the predetermined duty.

The irradiating may include irradiating light of a brightness value inversely proportional to the predetermined duty.

The predetermined duty may be between 5% and 50%.

The method may further include generating a control signal for the LED light source according to a movement speed of paper or a scan unit and the predetermined duty.

The generating of the scan image may include using an image sensor in which a plurality of Charge Coupled Devices (CCD) are disposed in a row in a main scan direction of the paper.

The method may further include printing the generated scan image.

The image scanning apparatus may be one of a copy machine, a facsimile, or a multifunction peripheral (MFP).

### Advantageous Effects

As described above, an image scanning apparatus 100 according to an example turns up a light source on a line basis for a very short time period, and turns off a light source for the rest of time, and thus an actual image acquisition width could be reduced. Therefore, the image scanning apparatus 100 may improve the sensitivity and the MTF function in the sub-scan direction.

### Description of Drawings

FIG. 1 is a block diagram to explain simple configuration of an image scanning apparatus according to an example;
FIG. 2 is a block diagram to explain detailed configuration of an image scanning apparatus according to an example;
FIG. 3 is a view illustrating detailed configuration of a scan unit of FIG. 1;
FIG. 4 is a view illustrating the form of the scan unit of FIG. 1;
FIG. 5 is a view to explain operations of a scan unit and a location sensor in a flatbed form;
FIG. 6 is a view to explain operations of a scan unit and a location sensor in an automatic supply device form;
FIG. 7 is a view illustrating an actual scanning sensitivity pattern in a sub-scan direction;
FIG. 8 is a view illustrating scanning sensitivity in a main scan/sub-scan direction according to a pixel size of an image sensor;
FIG. 9 is a view to explain a conventional light source controlling method;
FIG. 10 is a view to explain a light source controlling method according to an example;
FIG. 11 and FIG. 12 are views illustrating a simulation result according to an example;
FIG. 13 is a view illustrating a scanning sensitivity according to a duty rate of an LED light source;
FIG. 14 is a table illustrating MTF values according to duty rates of an LED light source;
FIG. 15 is a view illustrating MTF values according to duty rates of the LED light source; and
FIG. 16 is a flowchart to explain a method for image scanning according to an example.

### Detailed Description

Hereinafter, various examples of the disclosure will be described in detail with reference to the accompanying drawings. The examples to be described below may also be modified in various forms. In order to more clearly describe features of the examples, a detailed description of matters which are well known to those to skilled in the art to which the examples pertain will be omitted.

Meanwhile, in the specification, a case in which any component is "connected" with another component includes a case in which any component is 'directly connected' to another component and a case in which any component is 'connected to another component while having the other component interposed therebetween'. In addition, a case in which any component "comprises" another component means that any component may further comprise other components, not exclude other components, unless explicitly described to the contrary.

The expression "image forming job" as used herein may refer to various jobs related with image, such as, formation of image or generation/storage/transmission of image files (e.g., printing, scanning or faxing), and the expression "job" as used herein may refer to not only the image forming job, but also a series of processes required for performance of the image forming job.

In addition, an "image scanning apparatus" refers to an apparatus for scanning images of paper and generating scan images. Examples of the image scanning apparatus described above may include a scanner, a copier, a facsimile, a multi-function printer (MFP) of complexly implementing functions thereof through a single apparatus, and the like. The image scanning apparatus may be referred to as an image forming apparatus when it is a scanner, a copier, a facsimile, a multi-function printer (MFP) that can perform an image forming job.

In addition, an "image forming apparatus" refers to a device for printing print data generated from a terminal such as a computer on a recoding paper. Examples of the image forming apparatus described above may include a copier, a printer, a facsimile, a multi-function printer (MFP) of complexly implementing functions thereof through a single device, and the like. The image forming apparatus may mean all devices capable of performing an image forming task, such as the printer, the scanner, the fax machine, the multi-function printer (MFP), a display device, or the like.

The expression "hard copy" as used herein may refer to the operation of outputting an image on a print medium such as paper, or the like, and the expression "soft copy" may refer to the operation of outputting an image on a display device such as a TV, a monitor, or the like.

The expression "content" as used herein may refer to any type of data as a subject of the image forming job, such as picture, image, document file or the like.

The expression "printing data" as used herein may refer to data converted into format that can be printed by the printer. Meanwhile, when the printer supports direct printing, the file itself may be the printing data.

The expression "scan data" as used herein may refer to a scan image generated by a scan unit, such as a block image, and a color image, including various file formats (e.g., BMP, JPG, TIFF, PDF, etc.).

The expression "main scan direction" as used herein may refer to a scan direction of a scan unit, to be specific, a direction perpendicular to a movement direction of printing paper.

The expression "sub-scan direction" as used herein may refer to a movement direction of paper.

The expression "user" as used herein may refer to a person who performs manipulation related with the image forming job using the image forming apparatus or a device connected to the image forming apparatus wiry or wirelessly. Further, the expression "manager" as used herein may refer to a person who has an authority to access all the functions and systems of the image forming apparatus. The "manager" and the "user" may refer to the same person.

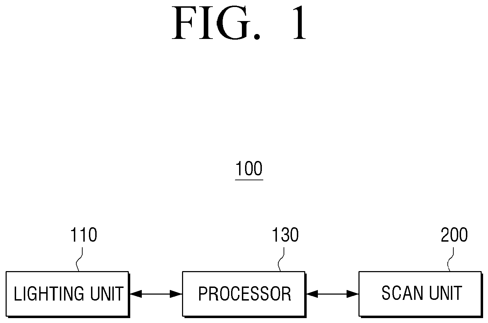

FIG. 1 is a block diagram to explain simple configuration of an image scanning apparatus according to an example.

Referring to FIG. 1, an image scanning apparatus 100 may include a lighting unit 110, a processor 130, and a scan unit 200.

The lighting unit 110 may irradiate light onto paper using an LED light source. The brightness value of the LED light source could be adjusted. The LED light source may output light of the brightness value corresponding to the magnitude of the input current. Light may be output continuously or discontinuously depending on whether the current of the LED light source is input. The lighting unit 110 may receive a control signal for brightness value information and operation duty information. The LED light source may be a W LED light source or a module with R LED, G LED, and B LED combined.

The lighting unit 110 may further include a member such as a polarizer plate so as to irradiate light onto paper uniformly.

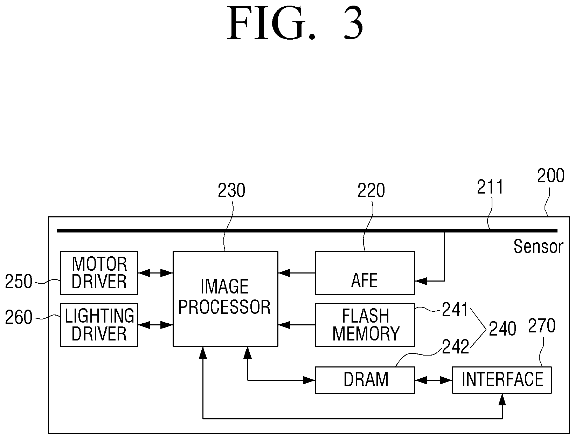

The scan unit 200 may generate a scan image by scanning paper. The scan unit 200 may generate a scan image by scanning image information of paper using light reflected by paper. The configuration and operation of the scan unit 200 will be described in detail with reference to FIG. 3. The scan unit 200 may be embodied as in the form of flatbed and/or automatic feeder (ADF).

The processor 130 may control each constituent element of the image scanning apparatus 100. The processor 130 may be embodied with a CPU, an ASIC, or the like and detect whether a scan command is received from a user. The scan command may be input through an operation input unit 160 provided in the image scanning apparatus 100, or input through a communicator 140 as a signal of an external device.

When a scan command is input, the processor 130 may control the lighting unit 110 and the scan unit 200 to perform a scan job.

The processor 130 may control the lighting unit 110 to irradiate light by a predetermined duty at every unit pixel (or a predetermined time, or a predetermined distance, for example, 42um) during the movement of paper in a sub-scan direction. For example, the processor 130 may control the lighting unit 110 to irradiate light continuously on each every unit pixel at a predetermined time point, and not to irradiate light after a time corresponding to a predetermined duty. The predetermined time point may be a point at which an SH signal value of the CCD transitions. The predetermined duty may be 5 to 50%. The processor 130 may generate a control signal with respect to the LED light source according to the operation speed of a driver and the predetermined duty and provide the control signal to the lighting unit 110.

The processor 130 may control the lighting unit 110 to irradiate light of a brightness value in inversely proportional to a predetermined duty. For this operation, the processor 130 may generate a control signal including current value information corresponding to the brightness value of a LED light source and provide the control signal to the lighting unit 110.

For this operation, the processor 130 may generate a control signal for the LED light source according to the operation speed of the driver and the predetermined duty and provide the control signal to the lighting unit 110.

The processor 130 may control the scan unit 200 to scan a plurality of image information in a main scan direction on a pixel basis during the movement of paper moves in a sub-scan direction.

When a scan image is generated by the scan unit 200, the processor 130 may control constituent elements of the image scanning apparatus 100 to store the scanned image in the storage 170, transmit the scanned image to the external device through the communicator 140, or print the scanned image in an image forming unit 180.

The image scanning apparatus 100 may turn on a light source for a very short period of time based on a line basis, and turn off the light source for the remaining time, and thus an actual image acquisition width may be reduced. Accordingly, the image scanning apparatus 100 may improve the sensitivity and MTF function in a sub-scan direction.

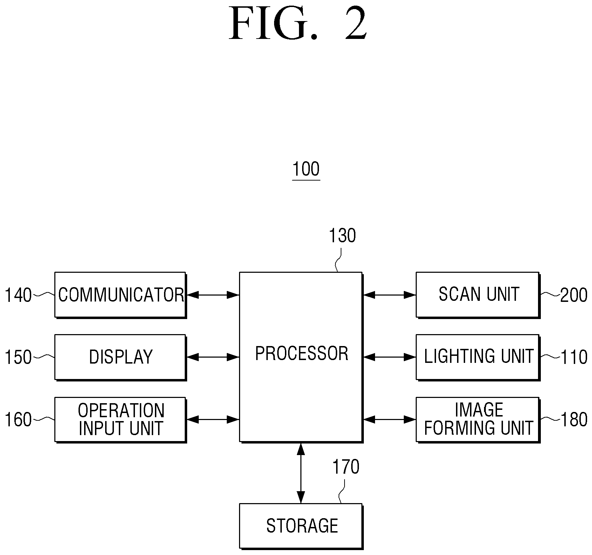

As described above, a simple configuration of the image scanning apparatus has been illustrated and described, but in the implementation, various configurations may be further added. The detailed description thereof will be described with reference to FIG. 2.

FIG. 2 is a block diagram to explain detailed configuration of an image scanning apparatus according to an example.

Referring to FIG. 2, an image scanning apparatus 100 may include a lighting unit 110, a processor 130, a communicator 140, a display 150, an operation input unit 160, a storage 170, an image forming unit 180, and a scan unit 200.

The operations of the lighting unit 110, the processor 130, and the scan unit 200 have been described with reference to FIG. 1, and thus the redundant description will be omitted.

The communicator 140 may be connected to a terminal device (not shown) such as a mobile device (Smart Phone, and Tablet PC), a PC, a laptop, a PDA, a digital camera, etc. and may receive files and print data from the terminal device (not shown). The communicator 140 may connect the image scanning apparatus 100 to the external device, and be connected to a terminal device through Local Area Network) (LAN) or Internet as well as a Universal Serial Bus (USB) port or wireless communication (e.g., WiFi 802.11a/b/g/n, NFC, Bluetooth, etc.)

The communicator 140 may transmit a scan image generated by the scan unit 200 or a scan image pre-stored in the storage 170 to the other terminal device.

The display 150 may display various information provided by the image scanning apparatus 100. The display 150 may display a user interface window for selecting various functions provided from the image scanning apparatus 100.

The display 150 may be a monitor such as LCD, CRT, OLED, etc., or embodied as a touch screen that simultaneously performs the function of the operation input unit 160 as well.

The display 150 may display a control menu for performing the function of the image scanning apparatus 100. The user may input a scan command on the displayed user interface window. The scan command may be a command for performing only a scan job, and the command may be a command of scan-to-server, scan-to-DLNA, scan-to-cloud, etc. for transmitting the scanned image to a specific server.

When the image scanning apparatus 100 is a MFP capable of both printing and copying, the scan command may be a copy command for using a scan function. An example describes that a scan command is received through the operation input unit 160, but in the implementation, the scan command may be received from a host device (not shown) through the communicator 140.

The display 150 may display the generated scan image and information on the scan image. The displayed scan image may be a scan image itself, or a preview image for the scan image.

The operation input unit 160 may receive a function selection and a control command for the function from a user. The function may include printing, copying, scanning, facsimile transmission, etc. The operation input unit 160 may receive the function selection and the control command through a control menu displayed on the display 150.

The operation input unit 160 may be embodied as a plurality of buttons, keyboards, or mouse, or embodied as a touch screen capable of performing the function of the display 150 as well.

The storage 170 may store print data received through the communicator 140. The storage 170 may store a scan image generated by the scan unit 200.

The storage 170 may store information on a predetermined duty, and store information on a plurality of duties and a brightness value (or a current value) corresponding to each of the plurality of duties in the form of a look-up table.

The storage 170 may be embodied as a storage medium in the image scanning apparatus 100 and an external storage medium, for example, a removable disk including a USB memory, a storage medium connected to a host device, a web server through network, etc.

The image forming unit 180 may print printing data. The image forming unit 180 may form an image on a recording medium by various printing methods such as an electrophotographic method, an inkjet method, a thermal transfer method, and a direct thermal method. For example, the image forming unit 180 may print an image on a recording medium by a series of processes including exposure, development, transfer, and fixing.

FIG. 1 and FIG. 2 illustrate that the lighting unit 110 performs light irradiation under the control of the processor 130, but in the implementation, the lighting unit 110 may perform a fixing function under the control of the scan unit 200. In addition, in the implementation, the lighting unit 110 may be embodied as the configuration in the scan unit 200.

In addition, FIG. 1 and FIG. 2 illustrate and describe the general function of the image scanning apparatus 100, but the image scanning apparatus may further include a scan unit for performing scanning, a facsimile transceiver for transmitting and receiving facsimile, etc.

FIG. 3 is a view illustrating detailed configuration of a scan unit of FIG. 1. The scan unit of FIG. 3 may be embodied as a separate scan device, not the above-described image scanning apparatus.

Referring to FIG. 3, a scan unit 200 may include a sensor circuit 211, a conversion circuit 220, an image processor 230, a memory circuit 240, a motor driver 250, an lighting driver 260, and a communication circuit 270.

The sensor circuit 211 may scan image information of paper. The sensor circuit 211 may include a plurality of Charge Coupled Devices (CCD) or a plurality of CMOS image sensors (CISs) arranged in a row in a main scan direction.

The conversion circuit 220 may convert the signals scanned by the sensor circuit 211 into digital signals. To be specific, in the case of CCD and Digital CIS, the scanned signal may be converted into the digital signal to be output, but in the case of CMOS image sensor (CIS), the scanned signal may be output as an analog signal. Therefore, when the sensor circuit 211 includes the CIS, the scanned signal may be converted into the digital signal using the conversion circuit 220, and the digital signal may be transmitted to the image processor 230.

The image processor 230 may perform image processing for the scanned signal. The image processor 230 may generate a scan image using the signal received through the sensor circuit 211 or the conversion circuit 220.

The image processor 230 may control each constituent element of the scan unit 200. The image processor 230 may control the sensor circuit 211 to perform a scanning operation when a scan command is input.

The image processor 230 may control a driver (not shown). The image processor 230 may control power supplied to a motor for moving paper or the scan unit 200 using the motor driver 250 to control the operation speed, location, etc. of the paper or the sensor circuit 211.

The image processor 230 may control the lighting unit 110. The image processor 230 may control the amount of light irradiated on paper by controlling the magnitude and the application time of power supplied to the lighting unit 110 using the lighting driver 260.

The image processor 230 may control the lighting unit 110 to irradiate light on each unit pixel at a predetermined duty during the movement of paper in a sub-scan direction. For example, the image processor 230 may control the lighting unit 110 to continuously irradiate light on each unit pixel at a predetermined time point and not to irradiate light after a time corresponding to the predetermined duty. The predetermined time may be a time point at which the SH signal value of the CCD transitions. The predetermined duty may be 5 to 50%.

The image processor 230 may control the lighting unit 110 to irradiate light of a brightness value inversely proportional to the predetermined duty.

The memory circuit 240 may store data for image processing. The memory circuit 240 may include a flash memory 241 for storing programs required for performing the image processing of the image processor 230 and a RAM 242 for storing the signal scanned by the image sensor circuit 211 and the data processed by the image processor 230.

The motor driver 250 may control power supplied to a driver (not shown) for moving paper or the scan unit 200. The motor driver 250 may control power supplied to the driver under the control of the image processor 230, and control the movement speed and location of the paper or the image sensor circuit 211.

The lighting driver 260 may control power supplied to the lighting unit 110. The lighting driver 260 may control the light irradiation interval and the brightness value of the light source of the lighting unit 110 under the control of the image processor 230.

The communication circuit 270 may output the data processed by the image processor 230 using the digital method. The communication circuit 270 may be a connector to connect the image processor 230 to an external controller or an external device, for example, a USB connector.

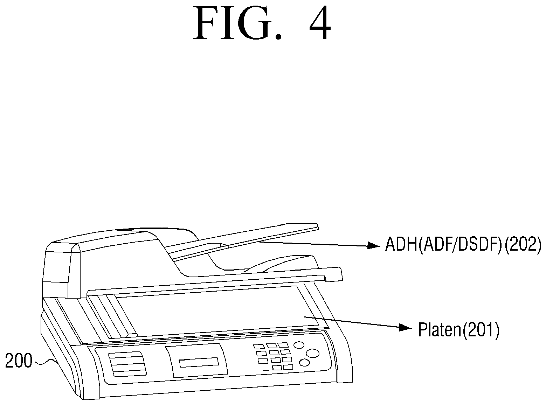

FIG. 4 is a view illustrating the form of the scan unit of FIG. 1.

Referring to FIG. 4, the scan unit 200 may include a first scan unit 201 in the flatbed form for scanning paper on a board, and a second scan unit 202 in the form of automatic feeding for continuously scanning paper on an automatic feeder.

According to an example, it is described that the scan unit 200 consists of two scan configurations, but in the implementation, the scan unit 200 may consist of any one of the scan configurations, or even three scan configurations.

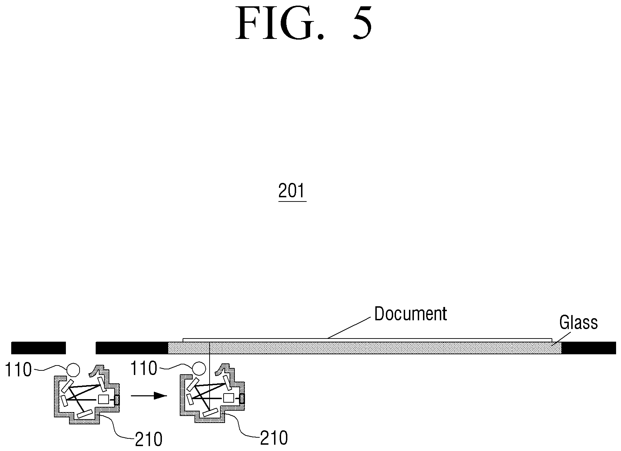

The first scan unit 201 may be a scan device in the flatbed form, paper may be provided on the board, and a scan module under the board may move and scan the paper. The configuration and operation of the first scan unit 201 will be described in detail with reference to FIG. 5.

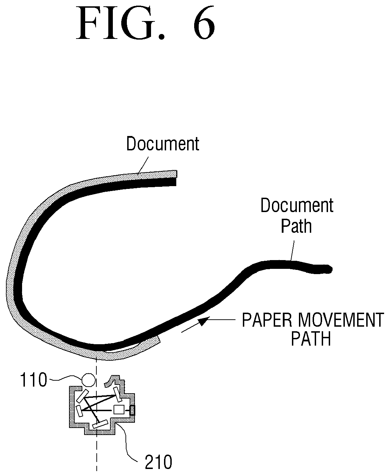

The second scan unit 202 may be a scan device in the form of automatic feeding. Paper may be placed on the automatic feeder, and sequentially moved to a paper movement path, and the scan module disposed on the paper movement path may scan the paper. The configuration and operation of the second scan unit 202 will be described in detail with reference to FIG. 6. The second scan unit 202 may be a single-sided scan device for scanning the single side of the paper, or a double-sided scan device capable of scanning the double side of the paper.

As described above, it is described that the first scan unit 201 and the second scan unit 202 have a separate scan module, but in the implementation, a single scan module may be commonly used in the first scan unit 201 and the second scan unit 202.

FIG. 5 is a view to explain operations of a scan unit and a location sensor in a flatbed form.

Referring to FIG. 5, the scan module 210 of the first scan unit 201 may be disposed under the flatbed, and move from a groove area to a paper area according to a scan command. The lighting unit 110 may be disposed on the scan module 210 to irradiate light upwardly.

When the scan module 210 moves to the paper area, the lighting unit 110 may continuously irradiate light on each unit pixel at a predetermined time point, and may not irradiate light after a time corresponding to a predetermined duty. Such process may be performed repeatedly to the end of the paper.

FIG. 6 is a view to explain operations of a scan unit and a location sensor in an automatic supply device form.

Referring to FIG. 6, a scan module 210 of a second scan unit 202 may be disposed in a predetermined area on a paper movement path, and the lighting unit 110 may be disposed on the scan module 210 to irradiate upwardly.

When paper is moved on the paper movement path, the lighting unit 110 may continuously irradiate light on each unit pixel at a predetermined time point, and may not irradiate light after a time corresponding to a predetermined duty. Such process may be performed repeatedly until paper passes through the paper movement path.

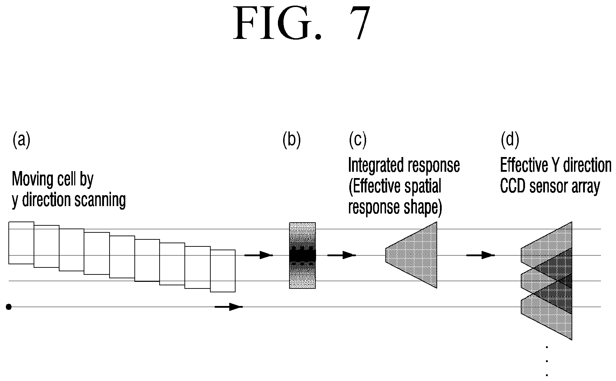

FIG. 7 is a view illustrating an actual scanning sensitivity pattern in a sub-scan direction.

Referring to FIG. 7, the scanning sensitivity in a sub-scan direction may have a triangle or trapezoidal shape unlike that in a main scan direction.

To be specific, referring to FIG. 7A, an image sensor for continuously scanning an image while scanning an image in a unit pixel length may move in a sub-scan direction.

Therefore, an area in which the image senor scans an image for a unit time, referring to FIG. 7B, may have a unit pixel length in a main scan direction, but have a length greater than the unit pixel length (approximately twice the unit pixel length) in a sub-scan direction.

FIG. 7C is a view illustrating a scanning sensitivity shape of one area, and FIG. 7B is a view illustrating a scanning sensitivity shape of a plurality of unit pixels in a sub-scan direction.

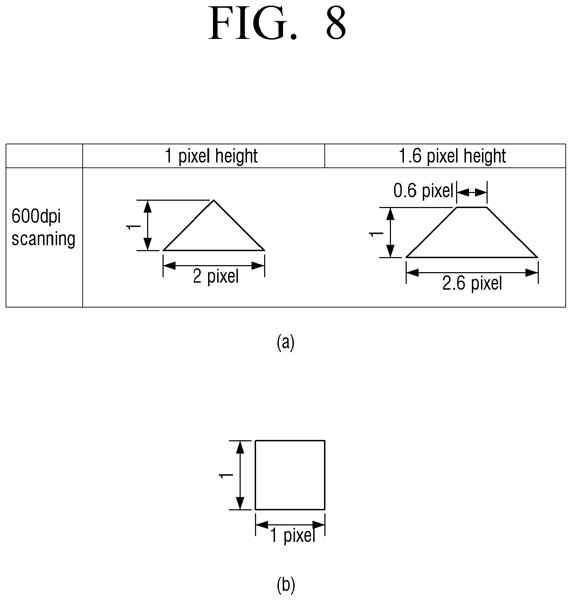

Meanwhile, recently, an image sensor with a longer length than a unit pixel in a sub-scan direction (e.g., 1.6 times the unit pixel length) may be used for improving sensitivity. In this case, referring to FIG. 8, the sensitivity width with respect to a sub-scan direction may be 2. 6 times as long as the unit pixel length.

However, referring to FIG. 8, the sensitivity width with respect to the sub-scan direction may be twice or 2.6 times the unit pixel length, and thus the Modulation Transfer Function (MTF) in a sub-scan direction may be significantly lower than the Modulation Transfer Function (MTF) in a main scan direction.

In this regard, according to an example, the sensitivity in a sub-scan direction may be improved by controlling the exposure time of the amount of light irradiated on paper in order to reduce the degradation of the Modulation Transfer Function (MTF) in a sub-scan direction.

For a method for controlling the exposure time of the amount of light, a conventional light source control method and a light source control method according to an example will be compared below.

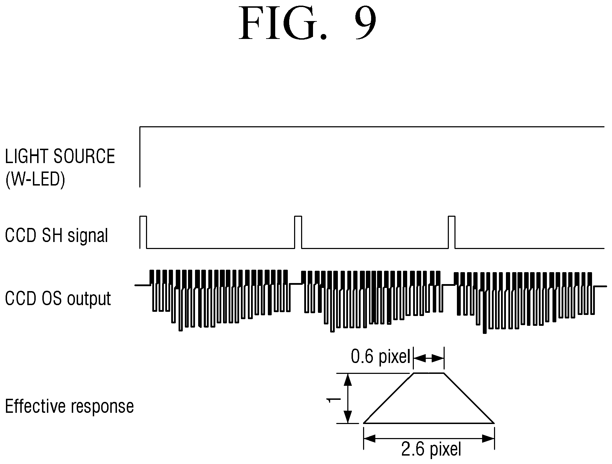

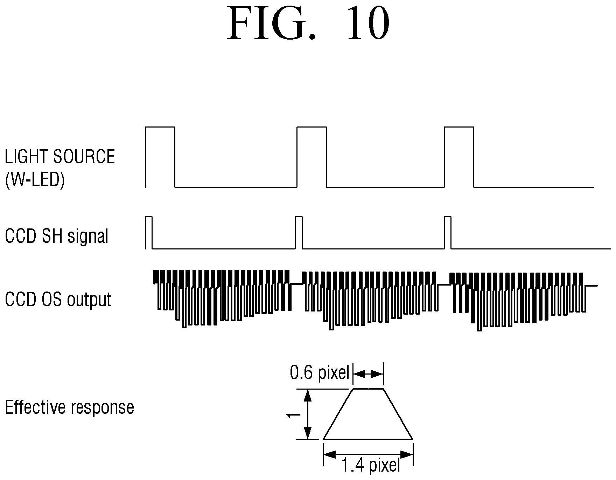

FIG. 9 is a view to explain a conventional light source controlling method, and FIG. 10 is a view to explain a light source controlling method according to an example.

Referring to FIG. 9, conventionally, a scan module may obtain an image in a main scan direction on a line basis while an illumination light source is continuously turned on.

However, according to an example, the illumination light source may be turned on for a very short period of time, and turned off for the remaining time. Therefore, practically, the image acquisition width of the scan module may be reduced in a sub-scan direction.

To be specific, when a time required for moving an image sensor or paper in a sub-scan direction by one pixel distance is referred to as a line exposure time, if a light source may be turned on for 10% of the line exposure time, and turned off for 90% of the line exposure time, the sensitivity width may be significantly increased from 2 pixel to 1.1 pixel. It is preferable that the time for turning on the light source is not disconnected but continuous. For example, when the light source is turned on for 2% of the line exposure time for five times for turning on the light source for 10% of the light exposure time in total, the area sensed when the light source is turned on may be two pixel distance as the prior art.

Because the time for turning on the light source during the line exposure time is reduced, the amount of light irradiated on paper may also be reduced. Therefore, the scan unit 200 may increase the brightness value of the LED light source to correspond to a ratio (or duty) of time for turning on the light source to maintain the entire amount of light irradiated on paper in order to equalize the amount of light irradiated on paper.

Referring to FIG. 10, a light source may be turned on continuously for 40% of the line exposure time, and the remaining 60% of the line exposure time may be turned off. Accordingly, it can be seen that the sensitivity width may be 1.4 pixel and compared to existing 2.6 pixel, the sensitivity function is significantly increased.

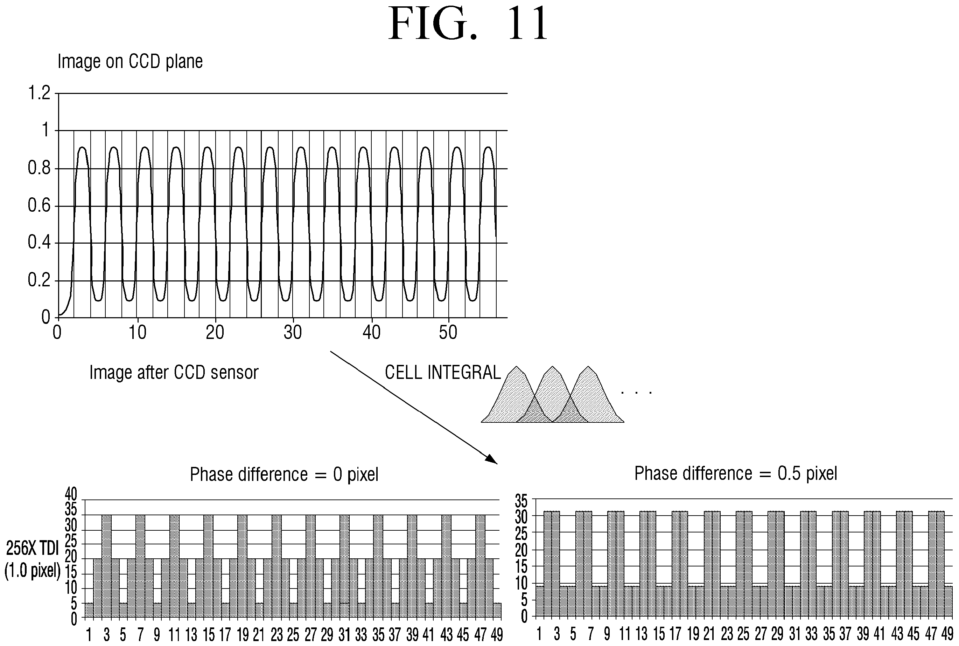

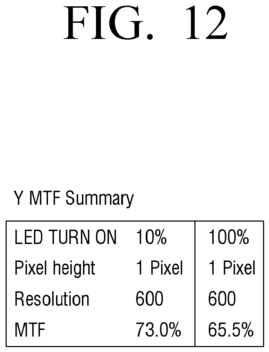

FIG. 11 and FIG. 12 are views illustrating a simulation result according to an example. To be specific, FIG. 11 is a view illustrating a process of calculating MTFs, and FIG. 12 is a view illustrating a calculation result thereof.

Referring to FIG. 12, when a duty of the time for turning on the light source is adjusted from 100% to 10%, the MTF performance may be improved from 65.5% to 73%. Therefore, a scan image generated according to an example may have the improved image quality in a sub-scan image.

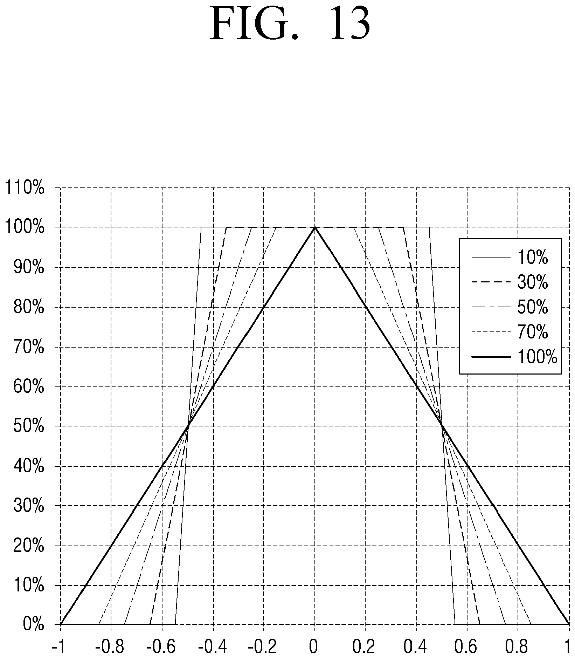

FIG. 13 is a view illustrating a scanning sensitivity according to a duty rate of an LED light source.

Referring to FIG. 13, when a duty rate of the LED light source is 100%, the scanning sensitivity in the sub-scan direction may have a triangle shape unlike that in the main scan direction.

However, when the duty rate is getting smaller, the scanning sensitivity in the sub-scan direction may be increased to have a trapezoidal shape.

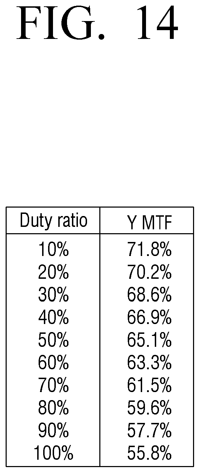

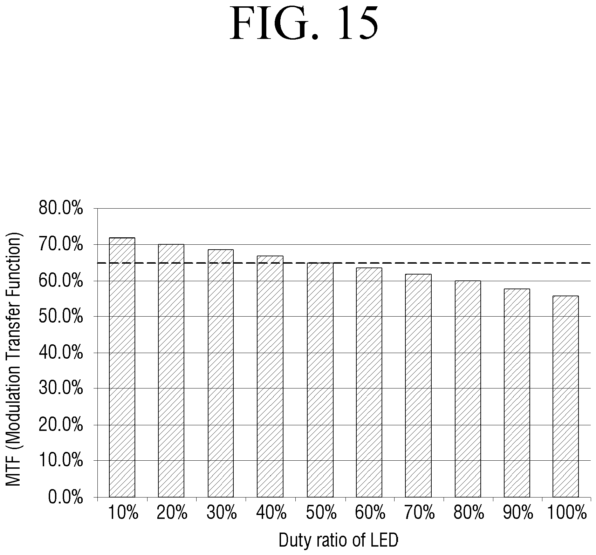

FIG. 14 is a table illustrating MTF values according to duty rates in a different system from that of FIG. 12. FIG. 14 is a table to show MTF values according to duty rates of the LED light source, and FIG. 15 is a view illustrating MTF values according to duty rates of the LED light source.

Referring to FIG. 14, and FIG. 15, the MFT performance may be gradually increased as the duty of the time for turning on the light source is reduced. Particularly, when the duty is equal to or less than 40%, the MTF performance may be 65% or more to have the improved image quality with respect to the sub-scan direction.

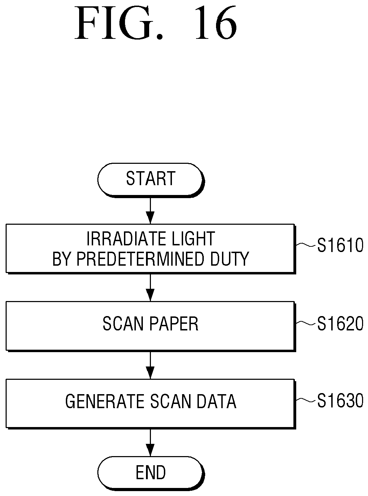

FIG. 16 is a flowchart to explain a method for image scanning according to an example.

Referring to FIG. 16, light may be irradiated on each unit pixel at a predetermined duty during the movement of paper in the sub-scan direction using the LED light source at operation S1610. To be specific, light may be irradiated continuously on each unit pixel at a predetermined time point and light may be irradiated after a time corresponding to a predetermined duty. The light of a brightness value inversely proportional to the predetermined duty may be irradiated.

Image information of paper may be scanned using the light reflected by the paper on a unit pixel at operation S1620.

The above-described irradiating and scanning process may be performed in all areas of the paper, and a scan image may be generated by combining image information on all areas at operation S1630.

When a scan image is generated, the generated scan image may be transmitted to a host device, or a printing job may be performed for the scan image.

Therefore, according to an image scanning method as disclosed in an example, a light source line may be turned on line by line for a very short period of time, and turned off for the remaining time to reduce the actual image acquisition width. Accordingly, the image scanning method may improve the sensitivity in the sub-scan direction and the MTF performance. The image scanning method referring to FIG. 16, may be performed by an image scanning apparatus having the configuration of FIG. 1 or FIG. 2, or a scan device having the configuration of FIG. 3. Also, the image scanning method may be performed on an image forming apparatus or a scan device having other configurations.

Furthermore, the image scanning method as described above may be implemented as at least one execution program for executing the image scanning method as described above, and the execution program may be stored in a computer readable recording medium.

Thus, each block of the disclosure may be embodied as computer-writable code on a computer-readable recording medium. The computer-readable recording medium may be a device capable of storing data that can be read by a computer system.

Although examples have been shown and described, it will be appreciated by those skilled in the art that changes may be made to these examples without departing from the principles of the disclosure. Accordingly, the scope of the disclosure is not construed as being limited to the described examples, but is defined by the appended claims.

## Claims

1. An image scanning apparatus (100), comprising:
a lighting unit (110) to irradiate light onto paper using an LED light source;
a scan unit (200) to generate a scan image by scanning image information of paper using light reflected by the paper; and
a processor (130) to control the lighting unit to irradiate light on each unit pixel by a predetermined duty of a line exposure time during a movement process of the paper in a sub-scan direction
**characterized in that** the processor (130) is configured to control the lighting unit (110) to irradiate light continuously on each unit pixel at a predetermined time point and not irradiate the light after a time corresponding to the predetermined duty for the remainder of the line exposure time.

2. The apparatus (100) as claimed in claim 1, wherein the processor (130) controls the lighting unit (110) to irradiate light of a brightness value inversely proportional to the predetermined duty.

3. The apparatus (100) as claimed in claim 1, wherein the predetermined duty is between 5% and 50%.

4. The apparatus (100) as claimed in claim 1, further comprising:
a driver (250) to move the paper or the scan unit (200).

5. The apparatus (100) as claimed in claim 4, wherein the processor (130) generates a control signal with respect to the LED light source according to an operation speed of the driver and the predetermined duty and provides the control signal to the lighting unit (110).

6. The apparatus (100) as claimed in claim 1, wherein the scan unit (200) includes an image sensor in which a plurality of charge coupled devices (CCDs) are disposed in a row in a main scan direction of the paper.

7. The apparatus (100) as claimed in claim 1, further comprising:
an image forming unit (180) to print the generated scan image.

8. The apparatus (100) as claimed in claim 7, wherein the image scanning apparatus is one of a copy machine, a facsimile, or a multifunction peripheral (MFP).

9. A method for image scanning of an image scanning apparatus (100), the method comprises:
irradiating light continuously on each unit pixel at a predetermined time point by a predetermined duty of a line exposure time during a movement process of paper in a sub-scan direction using an LED light source;
not irradiating the light after a time corresponding to the predetermined duty for the remainder of the line exposure time; and
scanning image information of paper using light reflected by the paper and generating a scan image.

10. The method as claimed in claim 9, wherein the irradiating comprises irradiating light of a brightness value inversely proportional to the predetermined duty.

11. The method as claimed in claim 9, wherein the predetermined duty is between 5% and 50%.

12. The method as claimed in claim 9, further comprising:
generating a control signal for the LED light source according to a movement speed of paper or a scan unit and the predetermined duty.

13. The method as claimed in claim 9, wherein the generating of the scan image comprises using an image sensor in which a plurality of charge coupled devices (CCDs) are disposed in a row in a main scan direction of the paper.

## Patentansprüche

1. Bildabtastvorrichtung (100), die Folgendes umfasst:
eine Beleuchtungseinheit (110), um Licht auf Papier unter Verwendung einer LED-Lichtquelle abzustrahlen;
eine Abtasteinheit (200), um ein Abtastbild durch Abtasten von Bildinformationen von Papier unter Verwendung von Licht zu generieren, das durch das Papier reflektiert wird; und
einen Prozessor (130), um die Beleuchtungseinheit dazu zu steuern, Licht auf jedes Einheitspixel durch ein zuvor bestimmtes Tastverhältnis einer Zeilenbelichtungszeit während eines Bewegungsvorgangs des Papiers in einer Unterabtastrichtung abzustrahlen,
**dadurch gekennzeichnet, dass** der Prozessor (130) dazu konfiguriert ist, die Beleuchtungseinheit (110) dazu zu steuern, Licht auf jedes Einheitspixel zu einem zuvor bestimmten Zeitpunkt fortlaufend abzustrahlen und das Licht nach einer Zeit, die dem zuvor bestimmten Tastverhältnis entspricht, für den Rest der Zeilenbelichtungszeit nicht abzustrahlen.

2. Vorrichtung (100) nach Anspruch 1, wobei der Prozessor (130) die Beleuchtungseinheit (110) dazu steuert, Licht mit einem Helligkeitswert abzustrahlen, der umgekehrt proportional zu dem zuvor bestimmten Tastverhältnis ist.

3. Vorrichtung (100) nach Anspruch 1, wobei das zuvor bestimmte Tastverhältnis zwischen 5 % und 50 % liegt.

4. Vorrichtung (100) nach Anspruch 1, die ferner Folgendes umfasst:
einen Treiber (250), um das Papier oder die Abtasteinheit (200) zu bewegen.

5. Vorrichtung (100) nach Anspruch 4, wobei der Prozessor (130) ein Steuersignal in Bezug auf die LED-Lichtquelle gemäß einer Betriebsgeschwindigkeit des Treibers und dem zuvor bestimmten Tastverhältnis generiert und das Steuersignal der Beleuchtungseinheit (110) bereitstellt.

6. Vorrichtung (100) nach Anspruch 1, wobei die Abtasteinheit (200) einen Bildsensor beinhaltet, in dem mehrere ladungsgekoppelte Bauelemente (*Charge Coupled Devices* - CCDs) in einer Reihe in einer Hauptabtastrichtung des Papiers angeordnet sind.

7. Vorrichtung (100) nach Anspruch 1, die ferner Folgendes umfasst:
eine Bilderzeugungseinheit (180), um das generierte Abtastbild zu drucken.

8. Vorrichtung (100) nach Anspruch 7, wobei die Bildabtastvorrichtung eine Kopiermaschine, ein Faksimile oder ein Multifunktionsperipheriegerät (*Multifunction Peripheral-* MFP) ist.

9. Verfahren zum Bildabtasten einer Bildabtastvorrichtung (100), wobei das Verfahren Folgendes umfasst:
kontinuierliches Abstrahlen von Licht auf jeden Einheitspixel zu einem zuvor bestimmten Zeitpunkt durch ein zuvor bestimmtes Tastverhältnis einer Zeilenbelichtungszeit während eines Bewegungsvorgangs von Papier in einer Unterabtastrichtung unter Verwendung einer LED-Lichtquelle;
nicht Abstrahlen des Lichts nach einer Zeit, die dem zuvor bestimmten Tastverhältnis entspricht, für den Rest der Zeilenbelichtungszeit; und
Abtasten von Bildinformationen von Papier unter Verwendung von Licht, das durch das Papier reflektiert wird, und Generieren eines Abtastbildes.

10. Verfahren nach Anspruch 9, wobei das Abstrahlen ein Abstrahlen von Licht mit einem Helligkeitswert umfasst, der umgekehrt proportional zu dem zuvor bestimmten Tastverhältnis ist.

11. Verfahren nach Anspruch 9, wobei das zuvor bestimmte Tastverhältnis zwischen 5 % und 50 % liegt.

12. Verfahren nach Anspruch 9, das ferner Folgendes umfasst:
Generieren eines Steuersignals für die LED-Lichtquelle gemäß einer Bewegungsgeschwindigkeit von Papier oder einer Abtasteinheit und dem zuvor bestimmten Tastverhältnis.

13. Verfahren nach Anspruch 9, wobei das Generieren des Abtastbildes ein Verwenden eines Bildsensors umfasst, in dem mehrere ladungsgekoppelte Bauelemente (CCDs) in einer Reihe in einer Hauptabtastrichtung des Papiers angeordnet sind.

## Revendications

1. Appareil de balayage d'images (100), comprenant :
une unité d'éclairage (110) afin d'irradier de la lumière sur du papier à l'aide d'une source de lumière DEL ;
une unité de balayage (200) afin de générer une image de balayage en balayant des informations d'image du papier à l'aide de lumière réfléchie par le papier ; et
un processeur (130) destiné à commander l'unité d'éclairage afin d'irradier de la lumière sur chaque pixel unitaire par un service prédéterminé d'un temps d'exposition de ligne pendant un processus de déplacement du papier dans un sens de sous-balayage ;
**caractérisé en ce que** le processeur (130) est configuré pour commander l'unité d'éclairage (110) afin d'irradier de la lumière en continu sur chaque pixel unitaire à un point temporel prédéterminé et de ne pas irradier de lumière après un temps correspondant au service prédéterminé pendant le reste du temps d'exposition de ligne.

2. Appareil (100) selon la revendication 1, le processeur (130) commandant l'unité d'éclairage (110) afin d'irradier de la lumière d'une valeur de luminosité inversement proportionnelle au service prédéterminé.

3. Appareil (100) selon la revendication 1, le service prédéterminé étant compris entre 5 % et 50 %.

4. Appareil (100) selon la revendication 1, comprenant en outre :
un pilote (250) pour déplacer le papier ou l'unité de balayage (200).

5. Appareil (100) selon la revendication 4, le processeur (130) générant un signal de commande par rapport à la source de lumière DEL selon une vitesse de fonctionnement du pilote et le service prédéterminé et fournissant le signal de commande à l'unité d'éclairage (110).

6. Appareil (100) selon la revendication 1, l'unité de balayage (200) comportant un capteur d'image dans lequel une pluralité de dispositifs à couplage de charge (DCC) sont disposés en rangée dans un sens de balayage principal du papier.

7. Appareil (100) selon la revendication 1, comprenant en outre :
une unité de formation d'image (180) pour imprimer l'image générée par balayage.

8. Appareil (100) selon la revendication 7, l'appareil de balayage d'images étant une photocopieuse, un télécopieur ou un périphérique multifonction (MFP).

9. Procédé de balayage d'images d'un appareil de balayage d'images (100), le procédé comprenant :
l'irradiation de lumière en continu sur chaque pixel unitaire à un point temporel prédéterminé par un service prédéterminé d'un temps d'exposition de ligne lors d'un processus de déplacement de papier dans un sens de sous-balayage à l'aide d'une source de lumière DEL ;
la non irradiation de la lumière après un temps correspondant au service prédéterminé pendant le reste du temps d'exposition de ligne ; et
le balayage d'informations d'image du papier à l'aide de lumière réfléchie par le papier et la génération d'une image de balayage.

10. Procédé selon la revendication 9, l'irradiation comprenant l'irradiation de lumière d'une valeur de luminosité inversement proportionnelle au service prédéterminé.

11. Procédé selon la revendication 9, le service prédéterminé étant compris entre 5 % et 50 %.

12. Procédé selon la revendication 9, comprenant en outre :
la génération d'un signal de commande pour la source lumineuse DEL selon une vitesse de déplacement du papier ou d'une unité de balayage et le service prédéterminé.

13. Procédé selon la revendication 9, la génération de l'image de balayage comprenant l'utilisation d'un capteur d'image dans lequel une pluralité de dispositifs à couplage de charge (CCD) sont disposés en rangée dans un sens de balayage principal du papier.
